# EUROPÄISCHE PATENTANMELDUNG

(11) **EP 4 344 092 A1**
(43) Veröffentlichungstag der Anmeldung: **27.03.2024**
(21) Anmeldenummer: 23184387.1
(22) Anmeldetag: 10.07.2023
(51) Int. Cl.: H04B 7/185

(54) **KALIBRIEREN VON AUSRICHTUNGSFEHLERN EINER KOMMUNIKATIONSEINHEIT MIT HILFE DES MONDES**

(30) Priorität: 22.09.2022 DE 102022124389
(71) Anmelder: Tesat Spacecom GmbH & Co. KG, 71522 Backnang (DE)
(72) Erfinder: DALLMANN, Daniel, 71522 Backnang (DE)
(74) Vertreter: LKGLOBAL Lorenz & Kopf Patentanwalt Attorney at Law PartG mbB

(57) **Zusammenfassung**

Eine Kommunikationseinheit (106) und ein Verfahren zum Kalibrieren der Ausrichtung einer Kommunikationseinheit (106) in einer mobilen Trägerplattform (100) ist beschrieben. Das Verfahren weist die folgenden Schritte auf: Ermitteln einer anfänglichen Ausrichtung der Kommunikationseinheit (106) auf den Mond basierend auf einer Position und Lage der mobilen Trägerplattform (100); Bewegen der Kommunikationseinheit (106), so dass diese die anfängliche Ausrichtung einnimmt; Abfahren eines Suchmusters mit der Kommunikationseinheit (106) aus der anfänglichen Ausrichtung heraus, bis eine Detektionseinheit den Mond erfasst; Ermitteln einer tatsächlichen Ausrichtung der Kommunikationseinheit (106), wenn die Detektionseinheit den Mond erfasst; Ermitteln einer Differenz zwischen der anfänglichen Ausrichtung und der tatsächlichen Ausrichtung der Kommunikationseinheit; Heranziehen dieser Differenz beim Anfahren einer Zielausrichtung mit der Kommunikationseinheit (106).

## Beschreibung

### Technisches Gebiet

Die vorliegende Beschreibung betrifft allgemein das technische Gebiet der Kommunikationstechnik, beispielsweise die Satellitenkommunikation. Insbesondere betrifft die Beschreibung einen Ansatz zum Kalibrieren einer Kommunikationseinheit mit Bezug zu einer Trägerplattform bzw. Korrigieren von Ausrichtungsfehlern der Kommunikationseinheit mit Bezug zu der Trägerplattform.

### Technischer Hintergrund

Satelliten werden oft als Trägerplattformen für Kommunikationseinheiten genutzt. Eine Kommunikationseinheit eines Satelliten kann auf eine Gegenstelle ausgerichtet werden und nach dem Ausrichten mit der Gegenstelle Daten austauschen. Je nach Übertragungstechnik ist es nötig, dass die Ausrichtung der Kommunikationseinheit auf die Gegenstelle sehr genau erfolgt, beispielsweise bei der Verwendung von Übertragungstechniken mit optischen Signalen.

Die Ausrichtung der Kommunikationseinheit auf die Gegenstelle kann in zwei Schritten erfolgen: in einem ersten Schritt erfolgt eine Grobausrichtung, an welche sich eine Feinausrichtung anschließt. Bei der Grobausrichtung wird die Kommunikationseinheit mit einer gewissen Unsicherheit in Richtung der Gegenstelle ausgerichtet. Bei der Feinakquisition wird die Kommunikationseinheit gemäß einem Suchmuster bewegt. Während der Feinakquisition sendet beispielsweise die Gegenstelle ein Signal aus, auf welchem basierend festgestellt werden kann, ob die Kommunikationseinheit richtig auf die Gegenstelle ausgerichtet ist.

Die Feinakquisition ist üblicherweise ein zeitaufwendiger Vorgang, weil insbesondere optische Signale stark fokussiert sind (d.h., dass das optische Signal mit einem geringen Öffnungswinkel ausgestrahlt wird) und die an der Datenübertragung beteiligten Kommunikationseinheiten (also beispielsweise ein erster Sender/Empfänger und ein zweiter Sender/Empfänger) mit einer hohen Genauigkeit aufeinander ausgerichtet sein müssen, um ein Signal mit einer geforderten Güte übertragen zu können.

Je kleiner also der nach der Gegenstelle abzusuchende Bereich ist, desto weniger Zeit ist für die Feinakquisition notwendig. Hierfür ist es wünschenswert, dass schon die Grobausrichtung der Kommunikationseinheit auf die Gegenstelle mit einer möglichst geringen Unsicherheit behaftet ist.

### Beschreibung

Es kann als Aufgabe betrachtet werden, die Ausrichtung einer Kommunikationseinheit auf einer mobilen Trägerplattform in Richtung einer Gegenstelle zu verbessern.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Ein Verfahren zum Kalibrieren der Ausrichtung einer Kommunikationseinheit in einer mobilen Trägerplattform, eine Kommunikationseinheit für eine mobile Trägerplattform, sowie ein Satellit mit einer solchen Kommunikationseinheit sind beschrieben. Im Zusammenhang mit der Kommunikationseinheit oder Komponenten der Kommunikationseinheit beschriebene Funktionen können auch als Schritte des Verfahrens implementiert werden oder umgekehrt. Es sollte verstanden werden, dass nicht sämtliche Funktionen der Kommunikationseinheit gesondert im Zusammenhang mit dem Verfahren wiederholend beschrieben werden. Dies bedeutet jedoch nicht, dass diese Funktionen nicht als Schritte des Verfahrens implementiert sein können. Vielmehr werden Funktionen der Kommunikationseinheit nicht allesamt erneut als Schritte des Verfahrens beschrieben, um unnötige Doppelungen zu vermeiden. Es sollte jedoch verstanden werden, dass sämtliche Funktionen der Kommunikationseinheit oder einer ihrer Komponenten als Schritte des Verfahrens implementierbar sind.

Gemäß einem ersten Aspekt weist eine Kommunikationseinheit für eine mobile Trägerplattform eine Aufhängung, eine Sende-/Empfangseinheit, eine Detektionseinheit, eine Antriebseinheit und eine Steuereinheit auf. Die Aufhängung ist ausgestaltet, die Kommunikationseinheit mit der mobilen Trägerplattform (beispielsweise starr oder bewegbar) zu verbinden. Die Sende-/Empfangseinheit ist ausgestaltet, einen Übertragungskanal zu einer Gegenstelle aufzubauen, beispielsweise um Informationen über den Übertragungskanal in eine oder beide Richtungen zu übertragen. Die Detektionseinheit ist ausgestaltet, ein elektromagnetisches Signal zu erfassen, welches insbesondere im Rahmen der Grobausrichtung und/oder Feinakquisition der Kommunikationseinheit auf die Gegenstelle verwendet wird. Die Antriebseinheit ist ausgestaltet, die Kommunikationseinheit zu bewegen, entweder relativ zu der Trägerplattform oder mitsamt der Trägerplattform. Die Steuereinheit ist ausgestaltet, die Antriebseinheit anzusteuern, um die Bewegung der Kommunikationseinheit herbeizuführen. Die Steuereinheit ist weiter ausgestaltet, basierend auf einer Position und Lage der mobilen Trägerplattform eine anfängliche Ausrichtung der Kommunikationseinheit zu ermitteln, wobei die anfängliche Ausrichtung einer Ausrichtung der Kommunikationseinheit auf den Mond entspricht. Die Steuereinheit ist ausgestaltet, die Antriebseinheit so anzusteuern, dass die Kommunikationseinheit die anfängliche Ausrichtung einnimmt. Die Steuereinheit ist ausgestaltet, die Antriebseinheit so anzusteuern, dass die Kommunikationseinheit aus der anfänglichen Ausrichtung heraus ein Suchmuster abfährt, bis die Detektionseinheit den Mond erfasst. Die Steuereinheit ist weiter ausgestaltet, eine tatsächliche Ausrichtung der Kommunikationseinheit zu ermitteln, wenn die Detektionseinheit den Mond erfasst. Die Steuereinheit ist ausgestaltet, eine Differenz zwischen der anfänglichen Ausrichtung und der tatsächlichen Ausrichtung der Kommunikationseinheit zu ermitteln und diese Differenz beim Anfahren einer Zielausrichtung mit der Kommunikationseinheit zu berücksichtigen.

Die Kommunikationseinheit kann relativ zu der Trägerplattform bewegbar sein, beispielsweise über eine bewegbare Aufhängung. Es ist aber auch denkbar, dass die Kommunikationseinheit starr mit der Trägerplattform verbunden ist.

Die Sende-/Empfangseinheit kann beispielsweise als Laser-Kommunikationseinheit ausgestattet sein, welche für das Übertragen von Signalen mittels optischer Signale ausgestaltet ist. Um erfolgreich Daten zwischen zwei Stationen auf optischen Weg übertragen zu können, müssen die zwei Stationen üblicherweise aufeinander ausgerichtet werden, damit die von einer Station ausgesandten Signale von der anderen Station empfangen werden können. Um die Stationen aufeinander auszurichten, kann die Position und Lage beider Stationen herangezogen werden. Basierend auf diesen Angaben kann bestimmt werden, wie jede einzelne Station ausgerichtet werden muss, um auf die andere Station ausgerichtet zu werden. Insbesondere in der Laser-Kommunikation ist eine hochgenaue Ausrichtung der Stationen aufeinander vorteilhaft, weil ein Laserstrahl üblicherweise stark fokussiert ist und somit eine genaue Ausrichtung notwendig ist, damit sich die Gegenstelle innerhalb des Ausbreitungsvolumens des Laserstrahls befindet.

Die Aufhängung ist beispielsweise eine Halterung oder ein Arm (schwenkbar, drehbar oder allgemein bewegbar) oder eine Schwenkvorrichtung, welche einerseits mit der Kommunikationseinheit und andererseits mit der Trägerplattform verbunden ist. Beispielsweise ist die Aufhängung eine kardanische Aufhängung mit einem Tragrahmen, wobei die Kommunikationseinheit an dem Tragrahmen montiert ist. In einem Beispiel ist die Kommunikationseinheit relativ zu der Trägerplattform bewegbar, beispielsweise indem ein Wert für Elevation und Azimut eingestellt werden kann. Somit ist die Kommunikationseinheit um mindestens zwei Raumachsen schwenkbar. Es ist aber auch denkbar, dass die Kommunikationseinheit um drei Raumachsen schwenkbar ist. Wenn im Folgenden Beispiele beschrieben werden, in welchen auf eine Bewegung um zwei oder drei Raumachsen Bezug genommen wird, so gilt die entsprechende Beschreibung prinzipiell für eine Bewegung sowohl um zwei als auch um drei Raumachsen. Um die Kommunikationseinheit in eine gewünschte Ausrichtung zu bringen, kann es ausreichen, einen Wert für Elevation und Azimut einzustellen. Alternativ kann die Ausrichtung der Kommunikationseinheit unter Verwendung sogenannter Euler-Winkel eingestellt werden, indem Winkelwerte in einem definierten Koordinatensystem vorgegeben werden.

Für den Fall einer bewegbaren Aufhängung, wenn also die Kommunikationseinheit relativ zu der Trägerplattform bewegbar ist, wirkt die Antriebseinheit beispielsweise auf die Aufhängung oder einen Teil hiervon, so dass die Kommunikationseinheit mit Bezug zu der mobilen Trägerplattform bewegt wird und ein vorgegebener Wert für Elevation und Azimut der Kommunikationseinheit mit Bezug zu der mobilen Trägerplattform eingestellt wird. Die Antriebseinheit ist beispielsweise ein elektro-mechanischer Aktuator oder ein auf andere Weise ausgestaltet Aktuator, welcher eine Kraft auf die Kommunikationseinheit ausüben kann und dadurch die relative Bewegung zwischen Kommunikationseinheit und mobiler Trägerplattform herbeiführt.

Indem die Antriebseinheit auf die Kommunikationseinheit wirkt, bewegt sich die Kommunikationseinheit und mit der Kommunikationseinheit wird die Detektionseinheit bewegt und fährt das besagte Suchmuster ab.

Wenn die Kommunikationseinheit starr mit der Trägerplattform verbunden ist, kann die Antriebseinheit auf die gesamte Trägerplattform wirken und die Trägerplattform so im Raum ausrichten, wie das für die Kommunikationseinheit beschrieben ist. Indem die Trägerplattform bewegt wird, wird die Kommunikationseinheit automatisch mitbewegt. Die Antriebseinheit entspricht dann einer Lageregelung der Trägerplattform und übernimmt die Aufgabe der Ausrichtung der Trägerplattform mitsamt der Kommunikationseinheit.

Die Detektionseinheit kann einen oder mehrere Sensoren enthalten. Diese Sensoren sind ausgestaltet, die Einfallsrichtung eines elektromagnetischen Signals, wie beispielsweise eines optischen Signals, zu erfassen. Üblicherweise sendet eine Station ein Signal aus, um es der Gegenstelle zu ermöglichen, mithilfe dieses Signals die aussendende Station zu lokalisieren. Dieses Signal wird üblicherweise als Beacon bezeichnet. Die Detektionseinheit erfasst die Einfallsrichtung des Signals und übermittelt eine entsprechende Information an die Steuereinheit, welche dann die Antriebseinheit ansteuert, die Kommunikationseinheit so auszurichten, dass die Kommunikationseinheit auf die Gegenstelle ausgerichtet wird. Für diesen Vorgang kann beispielsweise ein optisches Signal verwendet werden, welches auf die Detektionseinheit trifft. Unter der Voraussetzung, dass die Ausrichtung der Detektionseinheit auf die Gegenstelle ausreichend genau ist und das optische Signal im Sichtfeld bzw. Erfassungsfeld der Detektionseinheit ist, kann die Kommunikationseinheit ausgerichtet werden. Je nach Einfallsrichtung des optischen Signals auf die Detektionseinheit wird die Kommunikationseinheit bewegt, bis das optische Signal in einem gewünschten Winkel, beispielsweise mittig, auf die Detektionseinheit trifft.

Wird eine mobile Trägerplattform mit einer Kommunikationseinheit an ihren Einsatzort gebracht, so muss zunächst die Kommunikationseinheit auf eine Gegenstelle ausgerichtet werden, damit ein Übertragungskanal aufgebaut und Signale ausgetauscht werden können. Um diese Ausrichtung der Kommunikationseinheit zu bewerkstelligen kann auf die Position und Lage (Ausrichtung im Raum) der mobilen Trägerplattform zurückgegriffen werden.

Die mobile Trägerplattform ist beispielsweise ein Satellit, dessen Position und Lage mit Hilfe von Positionierwerkzeugen auf der Erdoberfläche und/oder mit einem sogenannten Startracker bestimmt wird. Ausgehend von der Position und Lage des Satelliten kann ermittelt werden, wie die Kommunikationseinheit ausgerichtet sein muss, um grob in Richtung einer gewünschten Gegenstelle ausgerichtet zu sein. Dieser Vorgang kann als Grobausrichtung bezeichnet werden. Nach der Grobausrichtung erfolgt üblicherweise eine Feinakquisition der Gegenstelle. Hierbei fährt die Kommunikationseinheit ein Suchmuster ab, um auf die Gegenstelle ausgerichtet zu werden.

Die Feinakquisition kann zeitlich sehr aufwendig sein, weil ein Laserstrahl sehr stark fokussiert ist und dementsprechend einen kleinen Öffnungswinkel hat. Die Bahnen, welche die Kommunikationseinheit beim Abfahren des Suchmusters verfolgt, liegen mitunter sehr nahe beieinander. Demnach ist es vorteilhaft, wenn schon die Grobausrichtung der Kommunikationseinheit auf die Gegenstelle mit einem möglichst geringen Fehler behaftet ist.

Solche Fehler bei der Grobausrichtung können beispielsweise daraus resultieren, dass die Kommunikationseinheit mit Bezug zu der mobilen Trägerplattform einen zunächst unbekannten Versatz der relativen Ausrichtung aufweist. Die absolute Ausrichtung der Kommunikationseinheit, welche sich aus der Ausrichtung der Trägerplattform und der relativen Ausrichtung der Kommunikationseinheit zu der Trägerplattform ergibt, ist damit um den Versatz fehlerbehaftet. Der hier beschriebene Ansatz dient dazu, diesen Versatz der relativen Ausrichtung zwischen Kommunikationseinheit und mobiler Trägerplattform zu ermitteln. Dieser Versatz entspricht der oben genannten Differenz zwischen der anfänglichen Ausrichtung und der tatsächlichen Ausrichtung der Kommunikationseinheit.

Wenn die Steuereinheit die Kommunikationseinheit auf eine vorgegebene Ausrichtung bringt, wird zusätzlich zu der Position und/oder Ausrichtung der mobilen Trägerplattform auch der Versatz zwischen Kommunikationseinheit und mobiler Trägerplattform berücksichtigt, auf denen basierend Steuerkommandos für die Ausrichtung der Kommunikationseinheit auf der Trägerplattform ermittelt werden.

Die relative Lage der Kommunikationseinheit mit Bezug zu der mobilen Trägerplattform bzw. der Versatz kann beispielsweise als Verkippung der Kommunikationseinheit bezogen auf die mobile Trägerplattform bezeichnet werden. Diese Verkippung ist üblicherweise bedingt durch die Fertigungs- und Montagetoleranzen der Kommunikationseinheit in der mobilen Trägerplattform und/oder durch die Fertigung der Komponenten der Kommunikationseinheit, insbesondere der Aufhängung. Die Verkippung ist üblicherweise bei jeder mobilen Trägerplattform unterschiedlich, so dass es trotz bekannter Position und Lage der mobilen Trägerplattform sehr zeitaufwendig sein kann, die Sende-/Empfangseinheit auf die Gegenstelle auszurichten, weil ein relativ großer Bereich abgesucht werden muss, um die Sende-/Empfangseinheit auf die Gegenstelle auszurichten. Die Toleranzen und Ungenauigkeiten bei der Fertigung oder Montage der Kommunikationseinheit bringen die Verkippung mit sich. Die Verkippung hat für unterschiedliche Kommunikationseinheiten und/oder mobile Trägerplattformen unterschiedliche Werte und Richtungen, so dass ein Wert für die drei Raumachsen der Verkippung für jede Kommunikationseinheit bzw. mobile Trägerplattform individuell bestimmt werden muss. Ist die Verkippung (also die relative Lage zwischen Kommunikationseinheit und mobiler Trägerplattform unter Verwendung von drei Raumwinkeln) bekannt, so kann die Kommunikationseinheit ausgehend von der bekannten Position und Lage der mobilen Trägerplattform mit einer höheren Genauigkeit auf die Gegenstelle ausgerichtet werden. In anderen Worten wird der Bereich, welcher nach der Gegenstelle abgesucht werden muss, eingegrenzt bzw. dieser Bereich, in welchem sich die Gegenstelle befindet, kann mit Wissen der Verkippung zwischen Kommunikationseinheit und mobiler Trägerplattform mit einer höheren Genauigkeit angefahren werden. Dann wird ein Suchlauf mithilfe der Detektionseinheit gestartet, um die Kommunikationseinheit auf die Gegenstelle auszurichten.

Für die mobile Trägerplattform können zur Beschreibung der Ausrichtung Euler-Winkel verwendet werden. Ein Euler-Winkel beschreibt beispielsweise die Lage der Trägerplattform in einem definierten Koordinatensystem. Bei Satelliten wird oftmals das sog. Attitude Reference Frame, ARF, genutzt. Eine Achse des ARF ist ausgehend von dem Satelliten entlang der Bewegungsrichtung ausgerichtet und eine weitere Achse zeigt ausgehend von dem Satelliten in Richtung der Erde oder davon weg. Euler-Winkel können verwendet werden, um die relative Ausrichtung der mobilen Trägerplattform in dem ARF anzugeben.

Für die Kommunikationseinheit können Euler-Winkel verwendet werden, um die relative Ausrichtung zu der mobilen Trägerplattform anzugeben oder um die Ausrichtung der Kommunikationseinheit in dem definierten Koordinatensystem anzugeben, in welchem auch die Ausrichtung der Trägerplattform oder der Kommunikationseinheit beschrieben wird.

Allgemein kann die absolute Ausrichtung der Kommunikationseinheit in dem globalen dreidimensionalen Koordinatensystem ermittelt werden basierend auf der absoluten Ausrichtung der Trägerplattform und der relativen Ausrichtung zwischen der Kommunikationseinheit und der Trägerplattform. An dieser Stelle wird der oben beschriebene Versatz berücksichtigt, welcher durch Montage- und Fertigungstoleranzen der Kommunikationseinheit und/oder der Trägerplattform in das System eingebracht wird. Somit wird die absolute Ausrichtung der Kommunikationseinheit basierend auf der absoluten Ausrichtung der Trägerplattform, der relativen Ausrichtung zwischen der Kommunikationseinheit und der Trägerplattform sowie dem Versatz ermittelt.

Vorliegend wird vorgeschlagen, dass der Mond herangezogen wird, um den Versatz zu ermitteln. Aus der bekannten Position und Lage der Trägerplattform wird ermittelt, wie die Kommunikationseinheit ohne Berücksichtigung des Versatzes ausgerichtet werden muss, um zu dem aktuellen Zeitpunkt auf den Mond ausgerichtet zu sein (Soll-Ausrichtung). Die Steuereinheit steuert die Antriebseinheit an, damit die Kommunikationseinheit entsprechend ausgerichtet wird. Die Detektionseinheit ist ausgestaltet, zu erfassen, ob die Kommunikationseinheit tatsächlich auf den Mond ausgerichtet ist. Ist dies der Fall, d.h., dass die Kommunikationseinheit mit der Soll-Ausrichtung tatsächlich auf den Mond ausgerichtet ist, enthält das System keinen Versatz zwischen der Ausrichtung der Kommunikationseinheit und der Ausrichtung der Trägerplattform bzw. das System hat einen vorab festgelegten und bekannten Versatz. Ist die Kommunikationseinheit in der Soll-Ausrichtung jedoch nicht auf den Mond ausgerichtet, steuert die Steuereinheit die Antriebseinheit an, damit die Kommunikationseinheit ein Suchmuster abfährt und auf den Mond ausgerichtet wird. Beim Abfahren des Suchmusters wird die Kommunikationseinheit relativ zu der Trägerplattform nach einem vorgegebenen Schema bewegt und die Detektionseinheit erfasst, ob bzw. wann die Kommunikationseinheit exakt auf den Mond ausgerichtet ist. Die Kommunikationseinheit wird also in eine Ist-Ausrichtung gebracht, in welcher sie tatsächlich auf den Mond ausgerichtet ist. In diesem Zustand der Ist-Ausrichtung kann der Versatz als Differenz zwischen der anfänglichen Ausrichtung auf die errechnete Position des Mondes (Soll-Ausrichtung) und der tatsächlichen Ausrichtung (Ist-Ausrichtung) auf die tatsächliche Position des Mondes bestimmt werden.

Wenn nun die Kommunikationseinheit in eine bestimmte Richtung ausgerichtet werden muss, wird die absolute Ausrichtung der Trägerplattform, der Versatz, und die notwendige relative Ausrichtung der Kommunikationseinheit zu der Trägerplattform herangezogen.

In einer Ausführungsform hat die Detektionseinheit ein Erfassungsfeld, welches so bemessen ist, dass der Mond in einer Vollmondphase vollständig in dem Erfassungsfeld aufgenommen werden kann.

Wenn also die Kommunikationseinheit und damit die Detektionseinheit auf den Mond ausgerichtet wird, dann findet die scheinbare Größe des Mondes in der Vollmondphase in dem Erfassungsfeld Platz und durch die nahezu kreisförmige Gestalt des von der Sonne angeleuchtet Mondes kann die Kommunikationseinheit sehr genau ausgerichtet werden.

Somit ermöglicht es die Detektionseinheit, dass die Kommunikationseinheit mit einer hohen Genauigkeit auf den Mond ausgerichtet werden kann. Das Sichtfeld bzw. Erfassungsfeld der Detektionseinheit ist so bemessen, dass ein Öffnungswinkel des Sichtfeldes unter Berücksichtigung der Entfernung zum Mond und der scheinbaren Größe des Mondes den Mond bei Vollmond vollständig erfasst.

In einer weiteren Ausführungsform enthält die Detektionseinheit eine vier-Quadranten-Diode und ist ausgestaltet, eine Beleuchtungsintensität des Mondes in jedem Quadranten der vier Quadranten zu erfassen und die erfasste Beleuchtungsintensität an die Steuereinheit zu übermitteln. Die Steuereinheit ist ausgestaltet, die Kommunikationseinheit gemäß dem Suchmuster so lange zu bewegen, bis die Beleuchtungsintensität in den vier Quadranten gleich ist.

Dies bedeutet, dass der Mond mittig in dem Erfassungsfeld der Detektionseinheit angeordnet ist und die Ausrichtung der Kommunikationseinheit bzw. der Detektionseinheit auf den Mond auf einfache Weise und mit einer hohen Genauigkeit erfolgen kann.

Unter Verwendung der vier-Quadranten-Diode kann die Kommunikationseinheit wie folgt auf den Mond ausgerichtet werden: zunächst wird basierend auf der bekannten Position und Ausrichtung der Trägerplattform die vermutete Position des Mondes angefahren; sodann wird ein Suchmuster gefahren und währenddessen ein Lichteinfall in die vier Quadranten der Diode gemessen; wenn ein Schwellwert für den Lichteinfall in einem Quadranten überschritten wird, wird ein Suchmuster für das Mond-Tracking aktiviert, bei welchem die Steuereinheit die Antriebseinheit dergestalt ansteuert, damit die Kommunikationseinheit bzw. die Detektionseinheit so ausgerichtet wird, dass alle Quadranten der vier-Quadranten-Diode den gleichen Lichteinfall erfahren.

Der Versatz zwischen Kommunikationseinheit und Trägerplattform kann durch die Steuereinheit lokal ermittelt werden. Alternativ können die gemessenen Werte an eine Gegenstelle auf der Erdoberfläche übertragen werden, welche den Versatz ermittelt und an die Steuereinheit der Kommunikationseinheit überträgt. Jedenfalls wird der Versatz lokal durch die Steuereinheit der Kommunikationseinheit berücksichtigt, welche die Kommunikationseinheit auf eine gewünschte Gegenstelle ausrichtet und hierbei auf die Ausrichtung der Trägerplattform und den Versatz zwischen Kommunikationseinheit und Trägerplattform zurückgreift, wie oben beschrieben.

In einer weiteren Ausführungsform ist die Antriebseinheit ausgestaltet, die Kommunikationseinheit mit mindestens zwei rotatorischen Freiheitsgraden zu bewegen.

Die Kommunikationseinheit kann entweder hinsichtlich Elevation und Azimut geschwenkt werden oder es kann ein Lagewinkel bezogen auf alle drei Raumachsen in einem dreidimensionalen Koordinatensystem eingestellt werden.

In einer weiteren Ausführungsform ist die Sende-/Empfangseinheit eine optische Kommunikationseinheit.

Eine optische Kommunikationseinheit im Sinne dieser Beschreibung nutzt optische Signale für die Informationsübertragung. Die Sende-/Empfangseinheit ist beispielsweise eine Laser-Kommunikationseinheit. Gerade für Laser-Kommunikationseinheiten gilt, dass der für die Informationsübertragung verwendete Laserstrahl stark fokussiert ist und somit eine hochgenaue Ausrichtung der an der Übertragung beteiligten Stationen notwendig ist. Hierfür ist es hilfreich, für die Feinakquisition der beteiligten Stationen eine möglichst zuverlässige Grobausrichtung bereitzustellen. Mit Kenntnis des Versatzes zwischen Kommunikationseinheit und Trägerplattform kann die Grobausrichtung vergleichsweise zuverlässig erfolgen, so dass die Feinakquisition in einer kürzeren Zeitspanne erfolgen kann.

Die Sende-/Empfangseinheit ist grundsätzlich ausgestaltet, ein optisches Signal zu emittieren, um Informationen zu übertragen, sowie ein optisches Signal zu empfangen, um Informationen zu erhalten.

In einer weiteren Ausführungsform weist die Antriebseinheit mindestens einen elektro-mechanischen Aktuator auf.

Die Antriebseinheit kann für jede Bewegungsrichtung oder Schwenkrichtung der Kommunikationseinheit einen gesonderten Aktuator aufweisen. Bevorzugt weist die Antriebseinheit zwei oder drei Aktuatoren auf. Redundante Aktuatoren können vorgesehen sein, um den Ausfall eines Aktuators zu kompensieren.

Gemäß einem weiteren Aspekt ist ein Satellit angegeben, welcher eine Kommunikationseinheit wie hierin beschrieben aufweist.

Der Satellit kann eine Kommunikationseinheit oder mehrere Kommunikationseinheiten wie hierin beschrieben enthalten. Die eine oder die mehreren Kommunikationseinheiten werden mit ihrer Detektionseinheit zunächst auf den Mond ausgerichtet, um einen Versatz zwischen jeder Kommunikationseinheit und dem Satelliten zu ermitteln. Dieser Versatz ermöglicht es dann, die jeweilige Kommunikationseinheit auf eine gewünschte Gegenstelle unter Berücksichtigung des Versatzes grob auszurichten, um dann die Feinakquisition zwischen jeder Kommunikationseinheit und der jeweiligen Gegenstelle zu starten.

Das Ermitteln des Versatzes wird bevorzugt durchgeführt, nachdem ein Satellit in den Orbit gebracht wurde. Der Versatz zwischen Kommunikationseinheit und Satellit resultiert typischerweise aus Fertigungs- und Montagetoleranzen, so dass eine einmalige Ermittlung des Versatzes für eine Kommunikationseinheit nach Inbetriebnahme des Satelliten bzw. der Kommunikationseinheit ausreichend ist.

Das Ermitteln des Versatzes kann erneut durchgeführt werden, wenn festgestellt wird, dass die Feinakquisition eine zu lange Zeitdauer in Anspruch nimmt. Dies könnte daraus resultieren, dass der Versatz ungenau bestimmt wurde und die Grobausrichtung der Kommunikationseinheit auf die gewünschte Gegenstelle mit einer zu hohen Ungenauigkeit erfolgte.

Gemäß einem weiteren Aspekt ist ein Verfahren zum Kalibrieren der Ausrichtung einer Kommunikationseinheit in einer mobilen Trägerplattform angegeben. Das Verfahren weist die folgenden Schritte auf: Ermitteln einer anfänglichen Ausrichtung der Kommunikationseinheit auf den Mond basierend auf einer Position und Lage der mobilen Trägerplattform (die anfängliche Ausrichtung kann auch als Soll-Ausrichtung bezeichnet werden); Bewegen der Kommunikationseinheit, so dass diese die anfängliche Ausrichtung einnimmt; Abfahren eines Suchmusters mit der Kommunikationseinheit aus der anfänglichen Ausrichtung heraus, bis eine Detektionseinheit den Mond erfasst; Ermitteln einer tatsächlichen Ausrichtung der Kommunikationseinheit, wenn die Detektionseinheit den Mond erfasst (diese tatsächliche Ausrichtung, wenn die Detektionseinheit den Mond erfasst hat, bevorzugt mittig in einem Erfassungsfeld, kann als Ist-Ausrichtung bezeichnet werden); Ermitteln einer Differenz zwischen der anfänglichen Ausrichtung und der tatsächlichen Ausrichtung der Kommunikationseinheit (also der Differenz zwischen Soll-Ausrichtung und Ist-Ausrichtung); Heranziehen dieser Differenz beim Anfahren einer Zielausrichtung mit der Kommunikationseinheit.

Mit diesem Verfahren kann vermieden werden, dass die genaue Ausrichtung der Kommunikationseinheit mit Bezug zu der Trägerplattform mit aufwendigen Messungen ermittelt wird, bevor die Trägerplattform in Betrieb genommen wird. Vielmehr wird der Versatz zwischen Kommunikationseinheit und Trägerplattform zu Beginn der Inbetriebnahme oder unmittelbar vor der Inbetriebnahme mit Hilfe des Mondes und des hier beschriebenen Ansatzes bestimmt. Der zeitliche Aufwand für die Feinakquisition wird reduziert, wenn der Versatz zwischen Kommunikationseinheit und Trägerplattform ermittelt wird. Vielmehr wird vorliegend der Mond mit seiner exakt bekannten Position als Beacon verwendet. Die Detektionseinheit, welche mindestens einen Akquisitionssensor hat, hat ein Sichtfeld, welches minimal größer ist als der scheinbare Monddurchmesser während der Vollmondphase. Beispielsweise ist das Sichtfeld 10 mrad, wohingegen die scheinbare Größe des Mondes geringfügig kleiner ist, also in etwa 9 mrad oder größer. Somit kann die Detektionseinheit einen Zentrierungsfehler des Mondes in dem Sichtfeld messen, was es ermöglicht, die Detektionseinheit mit hoher Genauigkeit auf den Mond auszurichten.

Auch wenn in dieser Beschreibung auf dem Mond während der Vollmondphase Bezug genommen wird, kann der Mond auch in einer anderen Mondphase als Beacon für die Kalibrierung verwendet werden. Hierbei können, um Zentrierungsfehler auszugleichen, Korrekturfaktoren in Abhängigkeit der aktuellen Mondphase auf die Ausrichtung der Detektionseinheit angewandt werden.

Um die Genauigkeit der Kalibrierung zu verbessern, kann der Versatz der Kommunikationseinheit mit Bezug zu der Trägerplattform mehrfach bestimmt werden, insbesondere bei unterschiedlichen relativen Ausrichtungen des Mondes zu der Trägerplattform. Beispielsweise kann der Versatz in einem ersten Durchlauf ermittelt werden. Der Versatz kann in einem zweiten Durchlauf ermittelt werden, wenn sich die Ausrichtung der Trägerplattform relativ zum Mond verändert hat. Mehrere solcher Durchläufe für verschiedene Ausrichtungen der Trägerplattform relativ zum Mond können ausgeführt werden.

Die Kalibrierung, also das Bestimmen des Versatzes, kann unabhängig von einer Gegenstelle erfolgen, weil der Mond als Beacon verwendet wird. Natürlich können mehrere Kommunikationseinheiten auf einer oder mehreren Trägerplattformen kalibriert werden.

Das Verfahren entspricht den funktionalen Merkmalen, welche im Zusammenhang mit der Steuereinheit der Kommunikationseinheit beschrieben wurden. Die einzelnen Schritte werden an dieser Stelle nicht erneut beschrieben. Stattdessen wird auf die Details zu den Funktionen der Steuereinheit verwiesen, welche in sinngemäß gleicher Weise auch für dieses Verfahren gelten.

In einer Ausführungsform weist das Verfahren weiterhin die folgenden Schritte auf: Erfassen einer Beleuchtungsintensität des Mondes mit einer vier-Quadranten-Diode; Bewegen der Kommunikationseinheit gemäß dem Suchmuster, bis die Beleuchtungsintensität in den vier Quadranten gleich ist.

In einer weiteren Ausführungsform wird die Kommunikationseinheit um mindestens zwei rotatorische Freiheitsgrade bewegt, wenn die Kommunikationseinheit gemäß dem Suchmuster bewegt wird.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Kommunikationseinheit;
- Fig. 2: eine schematische Darstellung einer Trägerplattform und einer Gegenstelle;
- Fig. 3: eine schematische Darstellung eines Suchmusters, welches die Kommunikationseinheit abfährt;
- Fig. 4: eine schematische Darstellung des Erfassungsfeldes der Detektionseinheit mit dem darin zentrierten Mond;
- Fig. 5: eine schematische Darstellung der Schritte eines Verfahrens zum Kalibrieren der Ausrichtung einer Kommunikationseinheit mit Bezug zu einer Trägerplattform.

### Detaillierte Beschreibung von Ausführungsbeispielen

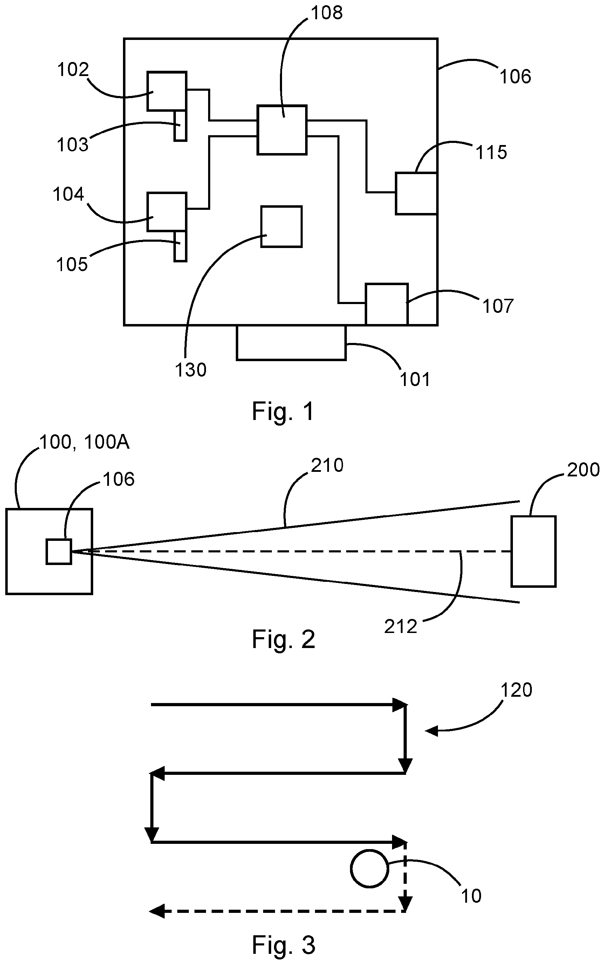

Fig. 1 zeigt eine Kommunikationseinheit 106. Die Kommunikationseinheit 106 ist mit einer Aufhängung 101 verbunden, welche die Kommunikationseinheit 106 mit einer Trägerplattform (nicht gezeigt, siehe Fig. 2) verbindet. Die Kommunikationseinheit 106 weist weiterhin eine Antriebseinheit 107 auf, welche ausgestaltet ist, die Kommunikationseinheit 106 mit Bezug zu der Trägerplattform zu bewegen. Die Antriebseinheit 107 ist beispielsweise als Motor ausgestaltet und wirkt auf die Aufhängung 101, um die Kommunikationseinheit 106 zu bewegen. Die Antriebseinheit 107 kann einen oder mehrere Motoren enthalten.

Die Kommunikationseinheit 106 weist eine Lagesensoreinheit 115 auf. Die Lagesensoreinheit 115 ist ausgestaltet, die Lage bzw. Ausrichtung der Kommunikationseinheit 106 zu bestimmen. Insbesondere bestimmt die Lagesensoreinheit 115 die relative Lage zwischen Kommunikationseinheit 106 und Trägerplattform.

Die Kommunikationseinheit 106 weist weiterhin zwei Detektionssensoren 102, 104 auf. Die beiden Detektionssensoren bilden gemeinsam die Detektionseinheit. Der erste Detektionssensor 102 mit einer Befestigung 103 mit der Kommunikationseinheit 106 verbunden. Der zweite Detektionssensor 104 ist mit einer Befestigung 105 mit der Kommunikationseinheit 106 verbunden. Die Detektionssensoren 102, 104 können beispielsweise als vier-Quadranten-Sensoren ausgestaltet sein. Die Detektionssensoren 102, 104 dienen dazu, die Kommunikationseinheit 106 auf eine Gegenstelle auszurichten und den Versatz zwischen Kommunikationseinheit und Trägerplattform unter Verwendung des Mondes zu bestimmen.

Die Kommunikationseinheit 106 weist weiterhin eine Steuereinheit 108 auf. Die Steuereinheit 108 ist funktional mit den anderen Komponenten der Kommunikationseinheit 106 gekoppelt. So erhält die Steuereinheit 108 Messwerte von den Detektionssensoren 102, 104 und der Lagesensoreinheit 115 und steuert die Antriebseinheit 107 an, um die Kommunikationseinheit 106 zu bewegen, beispielsweise um eine Drehbewegung in mindestens zwei rotatorischen Freiheitsgraden auszuführen.

Die Steuereinheit 108 ist beispielsweise als Controller oder Computer ausgestaltet, um vorab festgelegte Anweisungen auszuführen und die Komponenten entsprechend anzusteuern.

Die Kommunikationseinheit 106 weist weiterhin eine Sende-/Empfangseinheit 130 auf, welche als Laser-Kommunikationsterminal ausgestaltet ist. Die Sende-/Empfangseinheit 130 ist ausgestaltet, optische Signale zu emittieren und zu empfangen.

Fig. 2 zeigt eine Trägerplattform 100 in Form eines Satelliten 100A. Die Trägerplattform 100 enthält eine Kommunikationseinheit 106. Auch wenn in Fig. 2 lediglich eine Kommunikationseinheit 106 an Bord der Trägerplattform 100 gezeigt ist, so kann die Trägerplattform 100 mehrere Kommunikationseinheiten 106 enthalten.

Die Kommunikationseinheit 106 emittiert ein Übertragungssignal 210 mit einer Signalachse 212. Das Übertragungssignal 210 ist bevorzugt ein optisches Signal, welches von einem Laser in der Sende-/Empfangseinheit 130 (siehe Fig. 1) emittiert wird. Der Laser weist einen geringen Öffnungswinkel auf, weil das Signal entsprechend stark fokussiert ist.

Damit Informationen von der Trägerplattform 100 an die Gegenstelle 200 übertragen werden können, muss die Gegenstelle 200 das Übertragungssignal 210 erfassen können, d.h., dass die Gegenstelle 200 sich in dem Ausbreitungsvolumen des Übertragungssignals 210 befinden muss, und das Übertragungssignal muss im Erfassungsbereich oder Erfassungsfeld der Gegenstelle 200 sein, d.h. dass auch die Gegenstelle 200 ausreichend genau auf die Trägerplattform 100 ausgerichtet sein muss. In diesem Fall kann die Gegenstelle das Übertragungssignal 210 detektieren.

In Fig. 2 ist lediglich das Übertragungssignal von der Trägerplattform 100 zu der Gegenstelle 200 dargestellt. Es versteht sich jedoch, dass ebenso ein Übertragungssignal von der Gegenstelle 200 zu der Trägerplattform 100 emittiert werden kann.

Fig. 3 zeigt ein Suchmuster 120, welches von der Kommunikationseinheit 106 abgefahren wird, d.h., dass die Antriebseinheit die Kommunikationseinheit so bewegt, dass das Erfassungsfeld der Detektionseinheit dem Suchmuster 120 folgt. Dieses Suchmuster 120 wird abgefahren, damit die Kommunikationseinheit auf den Mond 10 ausgerichtet wird.

Sobald sich das Erfassungsfeld der Detektionseinheit dem Mond nähert, erhöht sich die Helligkeit in dem Erfassungsfeld der Detektionseinheit. Die Kommunikationseinheit fährt das Suchmuster 120 so lange ab, bis eine erhöhte Helligkeit detektiert wird. Dann wird von dem vorgegebenen Suchmuster 120 abgewichen, um den Mond 10 exakt zu erfassen. In der Darstellung der Fig. 3 ist dies dadurch ersichtlich, dass ein Teil des Suchmusters 120 mit gestrichelten Linien dargestellt ist. Die gestrichelten Linien werden von der Kommunikationseinheit nicht mehr abgefahren, weil der Mond an einer gewissen Stelle des Suchmusters 120 teilweise von dem Erfassungsfeld der Detektionseinheit erfasst wird und dann die Akquisition des Mondes 10 erfolgt.

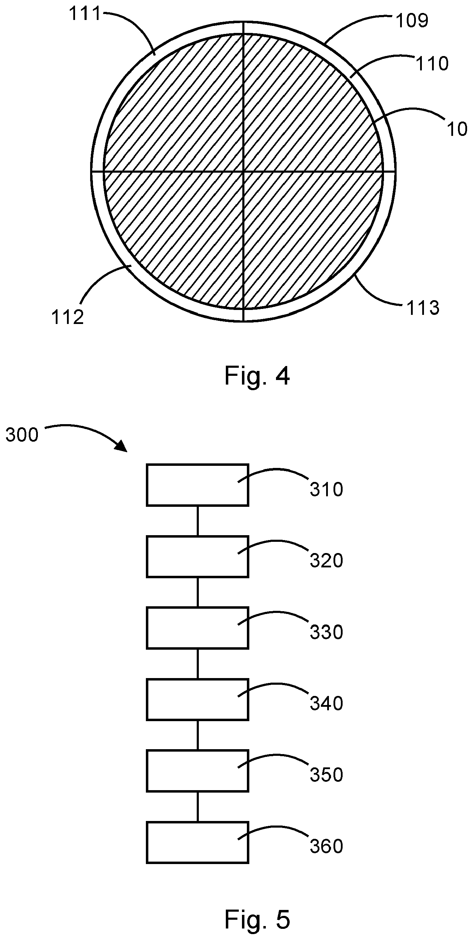

Insbesondere wird die Kommunikationseinheit dann so bewegt, dass das Erfassungsfeld den Mond mittig erfasst. Dieser Zustand ist in Fig. 4 gezeigt.

Fig. 4 zeigt ein Erfassungsfeld 109 einer vier-Quadranten-Diode, welche als Detektionssensor zum Einsatz kommt. Das Erfassungsfeld 109 ist in vier Quadranten 110, 111, 112, 113 unterteilt. Beispielsweise ist das Erfassungsfeld kreisförmig und die Quadranten erstrecken sich jeweils über eine Fläche von gleicher Größe. Im vorliegenden Beispiel hat ein Quadrant die Form eines Viertelkreises. Der Mond 10 ist dann mittig in dem Erfassungsfeld 109 angeordnet, wenn jeder Quadrant 110, 111, 112, 113 den gleichen Wert für die Beleuchtungsintensität liefert.

Es ist aus der Darstellung in Fig. 4 ersichtlich, dass die scheinbare Größe des Mondes 10 geringfügig kleiner ist als die Größe des Erfassungsfeldes 109.

Fig. 5 ist eine schematische Darstellung der scheite eines Verfahrens 300 zum Kalibrieren der Ausrichtung einer Kommunikationseinheit in einer mobilen Trägerplattform. Das Verfahren findet bevorzugt Anwendung im Zusammenhang mit der Kommunikationseinheit 106 wie in Fig. 1 gezeigt und dem Satelliten 100A wie in Fig. 2 gezeigt.

Das Verfahren 300 enthält in diesem Beispiel die folgenden Schritte: in einem ersten Schritt 310, Ermitteln einer anfänglichen Ausrichtung der Kommunikationseinheit 106 auf den Mond basierend auf einer Position und Lage der mobilen Trägerplattform 100; in einem zweiten Schritt 320, Bewegen der Kommunikationseinheit 106, so dass diese die anfängliche Ausrichtung einnimmt; in einem dritten Schritt 330, Abfahren eines Suchmusters mit der Kommunikationseinheit 106 aus der anfänglichen Ausrichtung heraus, bis eine Detektionseinheit den Mond erfasst; in einem vierten Schritt 340, Ermitteln einer tatsächlichen Ausrichtung der Kommunikationseinheit 106, wenn die Detektionseinheit den Mond erfasst; in einem fünften Schritt 350, Ermitteln einer Differenz zwischen der anfänglichen Ausrichtung und der tatsächlichen Ausrichtung der Kommunikationseinheit; in einem sechsten Schritt 360, Heranziehen dieser Differenz beim Anfahren einer Zielausrichtung mit der Kommunikationseinheit 106.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Mond
- 100: Trägerplattform
- 100A: Satellit
- 101: Aufhängung
- 102: erster Sensor der Detektionseinheit
- 103: Befestigung
- 104: zweiter Sensor Detektionseinheit
- 105: Befestigung
- 106: Kommunikationseinheit
- 107: Antriebseinheit
- 108: Steuereinheit
- 109: Erfassungsfeld einer vier-Quadranten-Diode
- 110: erster Quadrant
- 111: zweiter Quadrant
- 112: dritter Quadrant
- 113: vierter Quadrant
- 115: Lagesensoreinheit
- 120: Suchmuster
- 130: Sende-/Empfangseinheit
- 200: Gegenstelle
- 210: Übertragungssignal
- 212: Signalachse
- 300: Verfahren

## Patentansprüche

1. Kommunikationseinheit (106) für eine mobile Trägerplattform (100), die Kommunikationseinheit aufweisend:
eine Aufhängung (101), welche ausgestaltet ist, die Kommunikationseinheit (106) mit der mobilen Trägerplattform (100) zu verbinden;
eine Sende-/Empfangseinheit (130), welche ausgestaltet ist, einen Übertragungskanal zu einer Gegenstelle (200) aufzubauen;
eine Detektionseinheit (102, 104), welche ausgestaltet ist, ein elektromagnetisches Signal zu erfassen;
eine Antriebseinheit (107), welche ausgestaltet ist, die Kommunikationseinheit (106) zu bewegen;
eine Steuereinheit (108), welche ausgestaltet ist, die Antriebseinheit (107) anzusteuern, um die Bewegung der Kommunikationseinheit herbeizuführen;
wobei die Steuereinheit (108) ausgestaltet ist, basierend auf einer Position und Lage der mobilen Trägerplattform (100) eine anfängliche Ausrichtung der Kommunikationseinheit (106) zu ermitteln, wobei die anfängliche Ausrichtung einer Ausrichtung der Kommunikationseinheit (106) auf den Mond entspricht;
wobei die Steuereinheit (108) ausgestaltet ist, die Antriebseinheit (107) so anzusteuern, dass die Kommunikationseinheit die anfängliche Ausrichtung einnimmt;
wobei die Steuereinheit (108) ausgestaltet ist, die Antriebseinheit (107) so anzusteuern, dass die Kommunikationseinheit (106) aus der anfänglichen Ausrichtung heraus ein Suchmuster abfährt, bis die Detektionseinheit (102, 104) den Mond (10) erfasst;
wobei die Steuereinheit (108) weiter ausgestaltet ist, eine tatsächliche Ausrichtung der Kommunikationseinheit (106) zu ermitteln, wenn die Detektionseinheit (102, 104) den Mond erfasst;
wobei die Steuereinheit (108) ausgestaltet ist, eine Differenz zwischen der anfänglichen Ausrichtung und der tatsächlichen Ausrichtung der Kommunikationseinheit (106) zu ermitteln und diese Differenz beim Anfahren einer Zielausrichtung mit der Kommunikationseinheit (106) zu berücksichtigen.

2. Kommunikationseinheit (106) nach Anspruch 1,
wobei die Detektionseinheit (102, 104) ein Erfassungsfeld (109) hat, welches so bemessen ist, dass der Mond in einer Vollmondphase vollständig in dem Erfassungsfeld (109) aufgenommen werden kann.

3. Kommunikationseinheit (106) nach Anspruch 1 oder 2,
wobei die Detektionseinheit (102, 104) eine vier-Quadranten-Diode enthält und ausgestaltet ist, eine Beleuchtungsintensität des Mondes in jedem Quadranten der vier Quadranten zu erfassen und die erfasste Beleuchtungsintensität an die Steuereinheit (108) zu übermitteln;
wobei die Steuereinheit (108) ausgestaltet ist, die Kommunikationseinheit (106) gemäß dem Suchmuster so lange zu bewegen, bis die Beleuchtungsintensität in den vier Quadranten gleich ist.

4. Kommunikationseinheit (106) nach einem der vorhergehenden Ansprüche,
wobei die Antriebseinheit (107) ausgestaltet ist, die Kommunikationseinheit (106) mit mindestens zwei rotatorischen Freiheitsgraden zu bewegen.

5. Kommunikationseinheit (106) nach einem der vorhergehenden Ansprüche,
wobei die Sende-/Empfangseinheit (130) eine optische Kommunikationseinheit ist.

6. Kommunikationseinheit (106) nach einem der vorhergehenden Ansprüche,
wobei die Antriebseinheit (107) mindestens einen elektro-mechanischen Aktuator aufweist.

7. Satellit (100A) mit einer Kommunikationseinheit (106) nach einem der Ansprüche 1 bis 6.

8. Verfahren zum Kalibrieren der Ausrichtung einer Kommunikationseinheit (106) in einer mobilen Trägerplattform (100), das Verfahren aufweisend die folgenden Schritte:
Ermitteln einer anfänglichen Ausrichtung der Kommunikationseinheit (106) auf den Mond basierend auf einer Position und Lage der mobilen Trägerplattform (100);
Bewegen der Kommunikationseinheit (106), so dass diese die anfängliche Ausrichtung einnimmt;
Abfahren eines Suchmusters mit der Kommunikationseinheit (106) aus der anfänglichen Ausrichtung heraus, bis eine Detektionseinheit den Mond erfasst;
Ermitteln einer tatsächlichen Ausrichtung der Kommunikationseinheit (106), wenn die Detektionseinheit den Mond erfasst;
Ermitteln einer Differenz zwischen der anfänglichen Ausrichtung und der tatsächlichen Ausrichtung der Kommunikationseinheit;
Heranziehen dieser Differenz beim Anfahren einer Zielausrichtung mit der Kommunikationseinheit (106).

9. Verfahren nach Anspruch 8, weiterhin aufweisend:
Erfassen einer Beleuchtungsintensität des Mondes mit einer vier-Quadranten-Diode;
Bewegen der Kommunikationseinheit (106) gemäß dem Suchmuster, bis die Beleuchtungsintensität in den vier Quadranten gleich ist.

10. Verfahren nach Anspruch 9,
wobei die Kommunikationseinheit (106) um mindestens zwei rotatorische Freiheitsgrade bewegt wird, wenn die Kommunikationseinheit (106) gemäß dem Suchmuster bewegt wird.
